(19) **Europäisches Patentamt / European Patent Office / Office européen des brevets**

(11) **EP 1 992 121 B1**

(12) **EUROPEAN PATENT SPECIFICATION**

(45) Date of publication and mention
of the grant of the patent:
**09.03.2011 Bulletin 2011/10**

(51) Int Cl.:
*H04W 72/08* (2009.01)     *H04W 84/18* (2009.01)

(21) Application number: **07751676.3**

(86) International application number:
**PCT/US2007/004936**

(22) Date of filing: **26.02.2007**

(87) International publication number:
**WO 2007/103026 (13.09.2007 Gazette 2007/37)**

(54) **OFDMA RESOURCE ALLOCATION IN MULTI-HOP WIRELESS MESH NETWORKS**

OFDMA-RESSOURCENZUWEISUNG IN DRAHTLOSEN MULTIHOP-MESH-NETZWERKEN

ATTRIBUTION DE RESSOURCES OFDMA DANS DES RESEAUX MAILLES SANS FIL A SAUTS MULTIPLES

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.03.2006 US 371706**

(43) Date of publication of application:
**19.11.2008 Bulletin 2008/47**

(73) Proprietor: **Intel Corporation**
**Santa Clara, CA 95052 (US)**

(72) Inventor: **OYMAN, Ozgur**
**Palo Alto, California 94304 (US)**

(74) Representative: **Hutchinson, Glenn Stanley**
**Harrison Goddard Foote**
**Fountain Precinct**
**Balm Green**
**Sheffield**
**S1 2JA (GB)**

(56) References cited:
**EP-A- 1 376 939      EP-A- 1 617 608**
**WO-A-2005/060170     US-A1- 2003 235 175**

- **"Definition and assessment of relay based cellular deployment concepts for future radio scenarios considering 1st protocol caracteristics" [Online] 30 June 2005 (2005-06-30), , XP002359226 Retrieved from the Internet: URL:https://www.ist-winner.org/ Deliverable Documents/D3-4.pdf> [retrieved on 2005-12-15] paragraphs 3.4.1-3.4.6**
- **RANIWALA A ET AL: "CENTRALIZED CHANNEL ASSIGNMENT AND ROUTING ALGORITHMS FOR MULTI-CHANNEL WIRELESS MESH NETWORKS" MOBILE COMPUTING AND COMMUNICATIONS REVIEW, ACM, NEW YORK, NY, US, vol. 8, no. 2, April 2004 (2004-04), pages 50-65, XP001504370 ISSN: 1091-1669**

**Description**

BACKGROUND OF THE INVENTION

It is becoming increasingly attractive to use wireless nodes in a wireless network as relaying points to extend range and/or reduce costs of the wireless network. For example, in a wireless wide area network (WWAN) or wireless metropolitan area network (WMAN) that requires deployment of distributed base stations across large areas, the base stations need to be connected to a core network and/or each other via some type of backhaul. In conventional cellular networks, the backhaul has typically consisted of wired connections. However, a wireless backhaul, rather than, or in some combination with, a wired backhaul is increasingly being considered to ease deployment and reduce costs associated with these networks.

A type of network which uses wireless stations to relay signals between a source and destination is colloquially referred to herein as a mesh network. In mesh networks, wireless network nodes may form a "mesh" of paths for which a communication may travel to reach its destination. The use of multiple wireless stations to relay communications between the source and destination is generally referred to herein as a multi-hop wireless mesh network. The use of a multi-hop wireless mesh network as a wireless backhaul has become the subject of much focus and there are ongoing efforts to increase the efficiency of transmissions through wireless mesh networks.

WO 2005/060170 discloses a method of distributed resource reallocation for established connections in a multi-hop network in response to a topology change within the multi-hop network. This document forms the pre-characterising portion of the claims appended hereto.

EP 1 617 608 discloses a system and method for link quality routing using a weighted accumulative expected transmission time path metric.

The present invention discloses a method, apparatus and an article of manufacture having machine readable instructions stored thereon for communicating in a multi-hop wireless mesh network. System, according to independent claims 1, 5, 15. Further advantegeous aspects of the invention are disclosed in the dependent claims

BRIEF DESCRIPTION OF THE DRAWING

Aspects, features and advantages of embodiments of the present invention will become apparent from the following description of the invention in reference to the appended drawing in which like numerals denote like elements and in which:

Fig. 1 is a block diagram illustrating an arrangement of wireless nodes for a macro cell in an example wireless mesh network according to various embodiments of the present invention;

Fig. 2 is a block diagram of resource allocation within a macro cell according to one embodiment of the present invention;

Fig. 3 is a block diagram of resource allocation within a macro cell according to another embodiment of the present invention;

Fig. 4 is a block diagram of resource allocation within a macro cell according to yet another embodiment of the present invention;

Fig. 5 is a block diagram of resource allocation within a macro cell according to still another embodiment of the present invention;

Fig. 6 is a block diagram illustrating wireless multi-hop range extension according to various embodiments of the present invention; and

Fig. 7 is a block diagram showing an example wireless apparatus according to various aspects of the invention.

DETAILED DESCRIPTION OF THE INVENTION.

While the following detailed description may describe example embodiments of the present invention in relation to WMANs, the inventive embodiments are not limited thereto and can be applied to other types of wireless networks where similar advantages may be obtained. Such networks for which inventive embodiments may be applicable specifically include, wireless personal area networks (WPANs), wireless local area networks (WLANs), WWANs such as cellular networks and/or combinations of any of these networks.

The following inventive embodiments may be used in a variety of applications including transmitters and receivers of a radio system. Radio systems specifically included within the scope of the present invention include, but are not limited to, network interface cards (NICs), network adaptors, mobile stations, base stations, access points (APs), hybrid coordinators (HCs), gateways, bridges, hubs and routers. Further, the radio systems within the scope of the invention may include cellular radiotelephone systems, satellite systems, personal communication systems (PCS), two-way radio systems and two-way pagers as well as computing devices including radio systems such as personal computers (PCs) and related peripherals, personal digital assistants (PDAs), personal computing accessories and all existing and future arising systems which may be related in nature and to which the principles of the inventive embodiments could be suitably applied.

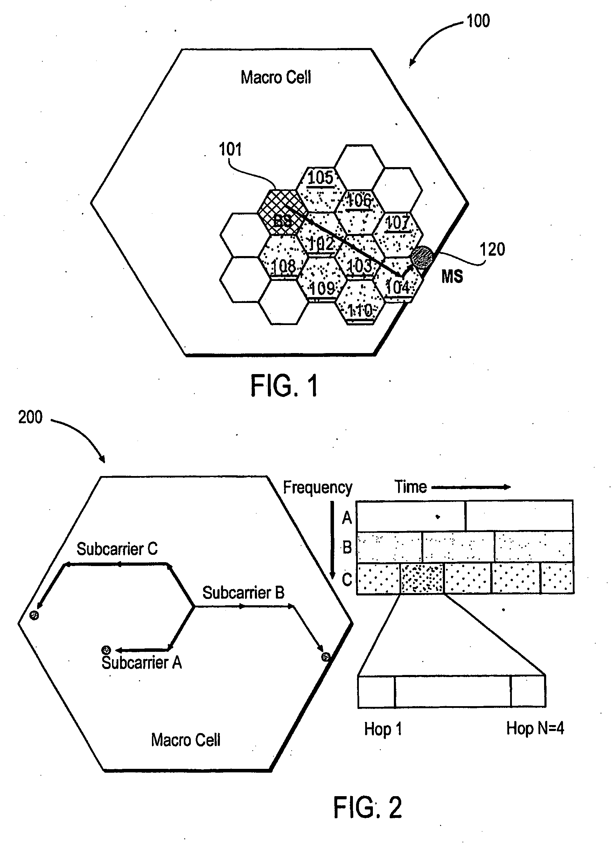

Turning to Fig. 1, a wireless communication network 100 according to various inventive embodiments may be any system having devices capable of transmitting and/or receiving information via over-the-air (OTA) radio frequency (RF) links. For example in one embodiment, network 100 may include a plurality of wireless nodes 101-110 (and other undesignated nodes) to communicate or relay messages to and/or from one or more fixed or mobile devices, such as mobile station 120. It should be recognized that Fig. 1 represents an example macro cell topology where each node 101-110 would be located at a center of each illustrated polynomial. Each hexagon in the illustrated pattern is intended to generally represent a spatial or "cellular" range for radio link coverage of each node in a region of nodes that form mesh network 100. Additional unreferenced cells (white hexagons) also include nodes of network 100 which may not be relevant to the specific example.

In certain embodiments, the wireless nodes in network 100 may be devices which communicate using wireless protocols and/or techniques compatible with one or more of the Institute of Electrical and Electronics Engineers (IEEE) various 802 wireless standards including for example, 802.11 (a), (b), (g) and/or (n) standards for WLANs, 802.15 standards for WPANs, and/or 802.16 standards for WMANs, although the inventive embodiments are not limited in this respect.

In certain non-limiting example implementations of the inventive embodiments, one or more of nodes in network 100 (e.g., node 101) may be a wireless transceiver that is connected to a core network, such as an Internet protocol (IP) network, via a physical wired connection (e.g., electrical or fiber optic connection). This type of station is referred to herein as a "macro" base station (BS). Additionally, in certain embodiments, one or more of nodes (e.g., nodes 102-110) in network 100 may be wireless transceivers that are not connected to a core network by electrical or wires or optical cables but rather provide a wireless backhaul as mentioned previously. These types of stations may be fixed radio relay nodes which are sometimes referred to as "micro" or "pico" base stations (depending on the size of their coverage area), although the inventive embodiments are not limited in this respect. Hereinafter, these type of unwired relay nodes are generically referred to as micro base stations or micro station nodes.

Typically, the transmit power and antenna heights of the wireless transceivers in micro base stations are less than that for the macro base station. Further, multi-hop wireless network 100 may be comprised of several macro cells, each of which may generally comprise at least one macro base station similar to station 101 and a plurality of micro base stations dispersed throughout the macro cell and working in combination with the macro base station(s) to provide a full range of coverage to mobile stations which may be present within the range of a macro cell. In certain embodiments of wireless mesh network 100, micro base stations may facilitate connectivity to each other and/or to macro base stations via wireless links using protocols compatible with one or more of the Institute of Electrical and Electronics Engineers (IEEE) various 802.16 and/or 802.11 standards although the inventive embodiments are not limited in this respect.

According to the various embodiments herein, the wireless nodes in network 100 may be configured to communicate using orthogonal frequency division multiple access (OFDMA) protocols. OFDMA is also referred to as multiuser orthogonal frequency division multiplexing (OFDM). In OFDM, a single transmitter transmits a carrier comprised of many different orthogonal (independent) frequencies (called subcarriers or tones) which may each be independently modulated according to a desired modulation scheme (e.g., quadrature amplitude modulation (QAM) or phase-shift keying (PSK)). OFDMA is adapted for multiple users generally by assigning subsets of subcarriers and/or time slots within subcarriers to individual users or nodes in the network. There are various types of OFDM and/or OFDMA schemes, e.g., scalable OFDMA and/or flash OFDMA, which may be utilized by the inventive embodiments as suitably desired.

Scheduling users and routing packets across multiple wireless hops in a wireless network has become an important issue. In a wireless mesh backhaul, where the wireless nodes are expected to be stationary as shown by the example topology of Fig. 1, throughput maximization and extension of coverage are key requirements while maintaining fairness across multiple users. In the context of using OFDMA communication protocols, it is not clear how to extend multi-user diversity concepts achieved by opportunistic scheduling mechanisms to such a multi-hop wireless architecture. Efficient routing of communications through a multi-hop wireless network as well as orthogonal resource allocation of time and frequency (i.e., scheduling) for multiple users over multiple hops are key considerations in a multi-hop wireless network design.

In the macro cell example of Fig. 1, routing transmissions between a macro base station 101 and a destination node (e.g., mobile station 120) may not only consider the fewest number of hops needed (shown by black arrows between micro station nodes 102, 103 and 104) to reach the destination, but may also consider the quality of air links in potential paths between these micro nodes and various adjacent micro station nodes 105-110 in a lattice or trellis of nodes between the source and destination node. Novel techniques for routing communications in a multi-hop wireless mesh network such as that shown in Fig. 1 have been previously proposed in U.S. Application Serial Number 11/318,206 entitled "Routing in Wireless Mesh Networks," filed by the instant inventor on December 13, 2005. Certain embodiments of the present invention may be applied in connection with the previously proposed routing techniques although the inventive embodiments are not limited in this respect.

In respect to scheduling/allocating air link resources for macro cell network 100, it is proposed in various inventive embodiments to use a scheme referred to herein as orthogonal frequency division multi-hop multiple access (OFDM$^2$A). OFDM$^2$A uses OFDMA principles to apply in the multi-hop wireless setting. OFDM$^2$A relates to orthogonal resource allocation of time/frequency for multiple users over multiple wireless hops. In one embodiment, the resource allocation may be controlled/ assigned by the macro base station 101 of the macro cell. This type of OFDM$^2$A is referred to herein as "centralized OFDM$^2$A". In other embodiments, the resource allocation may be controlled/assigned, at least in part, by individual relaying nodes (e.g., micro nodes 102-110), which is referred to herein as "distributed OFDM$^2$A" or "hybrid OFDM$^2$A" as explained in greater detail hereafter.

Consider a downlink scenario in macro cell network 100 of Fig. 1 (although the inventive embodiments may be applied in both uplink and downlink scenarios) where a packet initiated by macro base station 101 needs to be routed to mobile station 120. In this embodiment, it is assumed that only a single node (macro base station, micro base station or mobile station) transmits to another node (macro base station, micro base station or mobile station) in a given time/ frequency resource for any given multi-hop communication.

The search for a routing path may be limited to an initial trellis of nodes e.g., nodes 102-110, between base station 101 and destination 120. It is assumed that the optimal route lies on a multi-hop path within this trellis of relay nodes 102-110 and other potential paths may be ignored considering path loss effects.

CENTRALIZED OFDM$^2$A

In embodiments using centralized resource allocation, macro base station 101 may allocate OFDMA resources for the multi-hop communication links across all users and the micro base stations (e.g., nodes 102-110) will have no influence on the user resource allocation decisions. In this setting, the micro base stations act similarly to a repeater in order to enhance end-to-end link performance by multi-hop relaying.

For fixed applications where the radio channels between nodes are slowly varying, an intrinsic advantage of using OFDM$^2$A is the capability to exploit multi-user diversity embedded in diverse frequency selective channels. When all users share the same bandwidth, and macro base station 101 has full information about every user's route quality over all subcarriers and over all fading multi-hop channel links, the problem of subcarrier allocation and route selection to different users must be solved jointly. However, this may impose significant computational complexity at macro base station 101 as well as requiring fast and reliable feedback and feed forward channels for exchanging information between mobile stations, micro base stations 102-110 and macro base station 101. With a large number of users in network 100, an immense amount of information must therefore be sent back and forth between users and macro base station 101 thereby consuming a significant network overhead.

This motivates the design, in certain embodiments, of low-complexity suboptimal algorithms in which subcarrier allocation and route selection are separated. In various embodiments, each user may be assigned subcarriers as in present OFDMA schemes (e.g., 802.16 FUSC or PUSC modes or AMC subchannelization). Separately, a distributed routing algorithm, such as that described in the application referenced above, may be employed to find an optimal series of hops (i.e., multi-hop path) between macro base station 101 and the user (e.g., mobile station 120). Macro station 101 may, if available, utilize cost metrics, such as those obtained from performing the routing algorithm or other cost metrics, to allocate future OFDMA resources for the various nodes based on the known cost metrics. In this manner, not only is the complexity of optimization reduced, but the amount of overhead may also be reduced.

Accordingly, in certain embodiments routing selection for determining an optimal multi-hop path may be performed in a distributed fashion while macro base station 101 may centralize the scheduling/allocation of OFDMA resources for the individual nodes. For example, using the distributed routing algorithms of the above-referenced application, macro base station 101 may have knowledge about the throughput characteristics of the the optimal multi-hop path to mobile station 120. Macro base station 101 may additionally use these cost metrics for allocating OFDMA time/frequency resources for multiple users by assigning subcarriers to users based on the overall quality of their optimally determined multi-hop route.

Referring to Fig. 2, in one embodiment, allocating OFDMA resources for a particular user may include allocating a same subcarrier (frequency) for all hops of a given multi-hop route (designated by multiple arrows of a same shade) while subdividing the subcarrier via orthogonal time-division for each individual hop of the given route. In this example, the routing may define the time domain allocation (e.g., a different time slot for each hop in the path), while the scheduling is performed in the frequency domain with the goal of allocating frequencies to users based on the channel link qualities of the overall multi-hop route.

DISTRIBUTED OFDM$^2$A

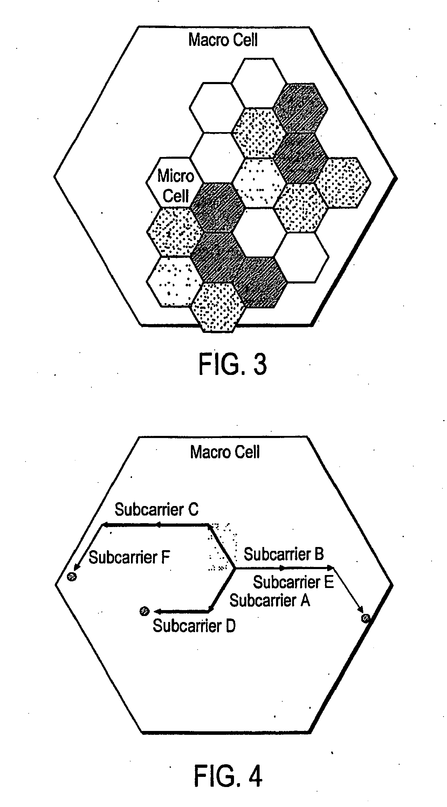

One issue with completely centralized allocation occurs when the channel conditions in a micro radio access network (RAN), which are the links between a micro base station and mobile stations in its coverage area, change rapidly. In this situation, subcarriers centrally assigned by the macro base station may result in poor channel conditions over the micro RAN between the micro base station and corresponding user stations. To address this issue, in one embodiment referring to Fig. 3, the macro base station may perform resource allocation for the multiple hops between micro base stations and the last micro base station in the path may perform resource allocation across mobile stations in their locality in a completely independent fashion and without influence from the macro base station. In this embodiment, the same subcarriers may be used by a set of micro base stations based on a particular static frequency reuse pattern as shown in Fig. 3, where the different shades of the micro cells represent the usage of different frequencies by the corresponding micro base station. In various embodiments, the micro cells shown in Fig. 3 may or may not be sectorized and micro base stations within the micro cells may employ omni-directional or directional antennas.

In an alternate embodiment, depending upon the quality of service (QoS) conditions required (e.g., user load, throughput demands or channel conditions), a micro base station can dynamically allocate different sets of subcarriers to the users in their locality in which case no static frequency reuse pattern is reinforced amongst the micro cells of a macro cell. In this approach, close coordination between neighboring micro base stations may be desirable such that they may compete or cooperatively bargain for frequency spectrum in order to optimize their respective micro RAN links.

The micro RANs and the wireless backhaul links (i.e., links between micro-to-micro and/or micro-to-macro base stations) may be assigned subcarriers over the same frequency band as shown in Fig. 2. In this case, where the same frequency resources are utilized, a distributed allocation mechanism may be desirable in which the macro base station and the micro base stations communicate with each other to share the common spectrum as efficiently as possible.

However, in alternate embodiments, referring to Fig. 4, the micro RANs and wireless backhaul links may use different frequency bands/subcarriers. In this case, the macro base station may perform centralized allocation for only the wireless backhaul links between base stations and each micro base station may make local allocation decisions for communications to users within its micro cell. In certain embodiments, the local allocations by the micro base station may be based on the channel qualities between itself and mobile stations within the micro cell. Due to the distributed nature of allocation for users inside micro cells, the distributed form of OFDM$^2$A according to the inventive embodiments provides the flexibility to change user subcarrier assignments dynamically without any significant latency. This facilitates the convenient usage of link adaptation and hybrid automatic repeat request (H-ARQ) techniques as suitably desired.


<u>HYBRID OR HIERARCHICAL OFDM$^2$A</u>


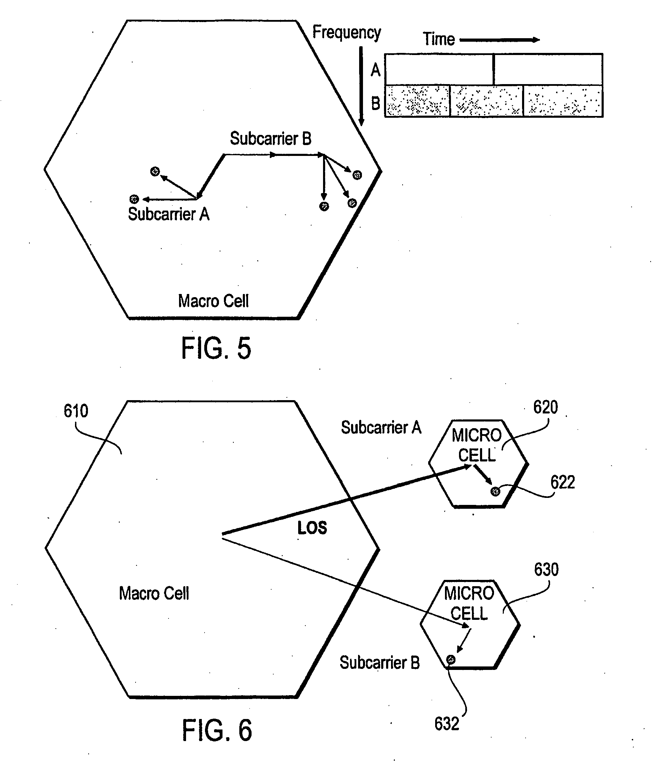

In certain embodiments of the present invention, referring to Fig. 5, the macro base station and the micro base stations may work together in such a manner that the macro base station makes certain partial decisions on the allocation of OFDMA time/frequency resources while the micro base stations may make the final decisions on specific resource allocation among users in its RAN locality. For example, in one embodiment, the macro base station may assign a clustered set of subcarriers to a given micro base station for use in its respective RAN and the micro base station selects which of the subcarriers to use for optimal communication with the mobile stations in its vicinity.

It is emphasized that the general OFDM$^2$A framework of the various embodiments encompasses both centralized and distributed resource allocation schemes and/or any combination of the foregoing embodiments. In so doing, resource allocation can be dynamically coordinated by the macro base station depending on the link qualities and throughput QoS demands of the users in each micro cell. Allocation of frequency resources may be based for example, on cost metrics as determined by a routing algorithm or other mechanism as explained further hereafter.

In the embodiments where the micro RAN operates over a different frequency than the wireless backhaul, the macro base station may perform resource allocation across the micro base stations based on the cost metrics accumulated over the wireless backhaul links. These cost metrics may involve link characteristics of the macro-to-micro base station link (i.e., a single hop) or they may involve the micro-to-micro base station links (i.e., multi-hop), all of which are typically slowly varying links as compared to the last hop micro RAN link. The micro RANs may therefore be permitted to locally perform a separate OFDMA based resource allocation on another carrier frequency to account for the typically faster varying link qualities associated with mobile stations.

In certain embodiments compatible with one or more IEEE 802.16 standards, certain channels on the uplink may be designated as channel quality indicator channels (CQICH). In this scheme, clients may feed back average signal to interference and noise ratio (SINR) measurements which may be utilized for allocating specific frequency/time resources of OFDMA frames. Other relevant metrics (such as the routing metrics discussed further below and which relate to the reciprocal of the maximum achievable throughput over a multi-hop path) may also be used for allocating OFDMA resources. In an example of the micro RAN, the micro base station may specify a CQICH allocation for a particular client in the control portion of a frame, which instructs the client to feedback the average SINR measure using the fast feedback channel to the micro base station. The same or similar procedure may also be used to feedback the routing metrics to the macro base station for resource allocation over the wireless backhaul.

ROUTING METRICS

Consider an N-hop path such that the transmission time at hop $n$ is $t_n$ seconds and the transmission rate at hop $n$ is $R_n$ bits/second. If the transmitted message contains $B$ bits of information and is transmitted in multiple hops over $T$ seconds, then the end-to-end throughput R can be calculated as:

$$T = \sum_{n=1}^{N} t_n = \sum_{n=1}^{N} \frac{B}{R_n} \qquad \rightarrow \qquad R = \left( \sum_{n=1}^{N} \frac{1}{R_n} \right)^{-1} \qquad (1);$$

where $R_n$ is computed as a function of the instantaneous received signal-to-noise ratio $SNR_n$, which depends on the knowledge of the channel realization over the $n^{th}$ hop. Due to the stationary nature of the micro base stations, the channels experienced over the hops will be slow-fading (except for the last hop involving the mobile station) and each node will be able to track its transmit/receive channels. The goal of the routing algorithm is to find the path that maximizes $R$ (or minimizes $T$). Equivalently, denoting the cost of each link as $c_n = 1/R_n$, the throughput-maximizing path is the path that minimizes total cost given as $\sum_{n=1}^{N} \frac{1}{R_n}$ for a path of length of $N$ hops. While in this context, we emphasize that the routing metric has been designed to maximize end-to-end throughput, it can also be designed to take into account other quality of service (QoS) measures such as latency or power efficiency. In any event, the end-to-end cost metrics of a multi-hop path may be known by the macro base station in the performance of this or other type of distributed routing algorithm.

CENTRALIZED OFDM$^2$A SCHEDULING ALGORITHM

Various embodiments have been described for allocating OFDMA resources in a multi-hop wireless mesh network. A example algorithms for centralized allocation of these resources will now be discussed in detail. Consider a communication scenario where the goal is to schedule $K$ users distributed randomly within the macro base station for downlink transmission. The advantage of such centralized scheduling is convenient resource management in terms of opportunistic scheduling, rate-adaptive relaying, fairness, interference management, low overhead/complexity and minimal required modification on existing macro-cellular architectures. By using the Viterbi (or any other distributed) routing algorithm (which was disclosed in the co-pending above-referenced patent application), the throughput-optimal routes for each user over all subcarriers can be constructed in a distributed fashion.

To summarize briefly, in Viterbi routing, the packets are transmitted between nodes of the network by using routing tables which are stored at each node of the network. Each routing table at each node lists all available destinations, the metric and next hop to each destination. Each node estimates the usable throughput of the potential "next-hop" nodes over the layered infrastructure and requests their cost metric to make its decision. With the arrival of the routing tables at the macro base station, the information about the cost metrics of the best routes of all the users over all the subcarriers is known at the macro base station. At this point, the macro base station may use these route metrics (in addition to their originally designed purpose for choosing multi-hop paths that maximize the end-to-end throughput) for opportunistic scheduling by assigning frequencies to users based on their route qualities. The route metrics can easily be mapped to end-to-end throughput measures for all the users, which makes well known scheduling algorithms like max-SINR (maximum signal to interference and noise ratio) and proportional-fair scheduling algorithms readily adaptable for allocating resources in the multi-hop wireless mesh environment. To recall, the end-to-end route cost metric and end-to-end throughput over a given path are related by

$$\cos t\_of\_path = \frac{1}{end\_to\_end\_rate} \qquad (2)$$

In a max-route scheduling algorithm (which is an adaptation of the max-SINR algorithm to the multi-hop micro-cellular domain) the user with the highest end-to-end throughput metric (or equivalently the lowest routing cost metric) may be scheduled over a given subcarrier. The proportional-fair scheduler selects users (i.e., mobile stations) according to the following criterion:

$$\hat{k} = \arg\max \frac{R_k(n)}{T_k(n)} \qquad k = 1, ..., K \qquad (3)$$

where $k$ is the user index, $R_k(n)$ is the instantaneous end-to-end rate of user $k$ (which is the reciprocal of the end-to-end routing cost metric for user $k$) at time $n$ based on a best route determined by the Viterbi or other distributed routing algorithm, and $T_k(n)$ is the long-term average rate served to user $k$, which is updated according to:

$$T_k(n+1) = \left(1 - \frac{1}{T_c}\right)T_k(n) + \frac{1}{T_c}R_k(n)\Lambda_k(n) \qquad (4)$$

where $T_c$ is the maximum amount of time for which an individual user can wait to receive data (size of the observation window in time slots) and $\Lambda_k(n)$ is an indicator random variable that is set to 1 if user $k$ is scheduled at time $n$ and to 0 otherwise. In this manner, orthogonal resource allocation (time/frequency) among multiple users over multiple hops may be provided in an efficient and fair manner. Embodiments of the present invention may simultaneously achieve the high throughput gains of multi-user diversity by the opportunistic scheduling of multiple users.

MULTI-HOP RANGE EXTENSION USING OFDM²A

Multi-hop range extension can also be achieved through OFDM²A, as depicted in Fig. 6. In this setting, the micro cells 620 and 630 are assumed to be outside the macro cell coverage region 610 of a macro base station, but the micro base stations of micro cells 620 and/or 630 are assumed to have a good link (possibly line of sight (LOS) link) with the macro base station of macro cell 610. Therefore, the macro base station can send data to mobile stations 622 or 632, which are outside the coverage region of macro cell 610 by using the micro base stations of micro cells 620 and 630 as relays. As a result, the multi-hop links between the macro base station of macro cell 610 and mobile stations 622, 632 can be established such that the users in the micro RAN can be supported by two (or more) hop communication techniques that utilize the micro base stations of cells 620, 630. In one embodiment, the resource allocation over the wireless backhaul to micro cells 620, 630 would be supported by centralized OFDM²A scheduling by the macro base station in macro cell 610 while the individual micro RANs in micro cells 620 and 630 would allocate time/frequency resources independently over a separate band.

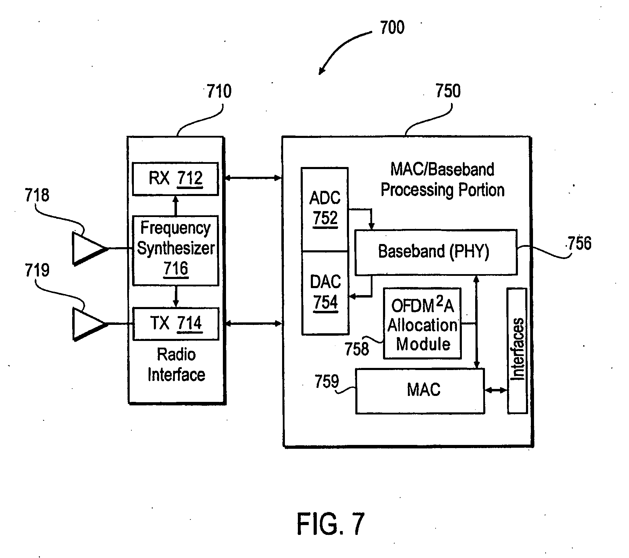

Referring to Fig. 7, an apparatus 700 for use in a wireless mesh network according to the various embodiments may include a processing circuit 750 including logic (e.g., circuitry, processor(s), software, or combination thereof) to allocate OFDMA resources as described in one or more of the embodiments above. In certain embodiments, apparatus 700 may generally include a radio frequency (RF) interface 710 and a baseband and MAC processor portion 750.

In one example embodiment, RF interface 710 may be any component or combination of components adapted to send and receive modulated signals (e.g., using OFDMA) although the inventive embodiments are not limited in this manner. RF interface 710 may include, for example, a receiver 712, a transmitter 714 and a frequency synthesizer 716. Interface 710 may also include bias controls, a crystal oscillator and/or one or more antennas 718, 719 if desired. Furthermore, RF interface 710 may alternatively or additionally use external voltage-controlled oscillators (VCOs), surface acoustic wave filters, intermediate frequency (IF) filters and/or radio frequency (RF) filters as desired. Various RF interface designs and their operation are known in the art and the description for configuration thereof is therefore omitted.

In some embodiments interface 710 may be configured to provide OTA link access which is compatible with one or more of the IEEE standards for WPANs, WLANs, WMANs or WWANs, although the embodiments are not limited in this respect.

Processing portion 750 may communicate/cooperate with RF interface 710 to process receive/transmit signals and may include, by way of example only, an analog-to-digital converter 752 for digitizing received signals, a digital-to-analog converter 754 for up converting signals for carrier wave transmission, and a baseband processor 756 for physical (PHY) link layer processing of respective receive/transmit signals. Processing portion 750 may also include or be comprised of a processing circuit 759 for MAC/data link layer processing.

In certain embodiments of the present invention, an OFDMA allocation module 758 may be included in processing portion 750 and which may function to allocate OFDMA resources as described previously. The functionality associated with OFDMA allocation module 758 will depend on whether apparatus 700 is used for a macro base station or a micro base station and/or which centralized, distributed or hybrid allocation technique is used. In certain embodiments, module 758 may also include functionality for a mesh routing manager to determine cost metrics and/or identify next hop nodes as described in the patent application referenced above.

Alternatively or in addition, PHY circuit 756 or MAC processor 759 may share processing for certain of these functions or perform these processes independently. MAC and PHY processing may also be integrated into a single circuit if desired.

Apparatus 700 may be, for example, a mobile station, a wireless base station or AP, a hybrid coordinator (HC), a wireless router and/or a network adaptor for electronic devices. Accordingly, the previously described functions and/or specific configurations of apparatus 700 could be included or omitted as suitably desired.

Embodiments of apparatus 700 may be implemented using single input single output (SISO) architectures. However, as shown in Fig. 7, certain implementations may use multiple input multiple output (MIMO), multiple input single output (MISO) or single input multiple output (SIMO) architectures having multiple antennas (e.g., 718, 719) for transmission and/or reception. Further, embodiments of the invention may utilize multi-carrier code division multiplexing (MC-CDMA) multi-carrier direct sequence code division multiplexing (MC-DS-CDMA) for OTA link access or any other existing or future arising modulation or multiplexing scheme compatible with the features of the inventive embodiments.

The components and features of apparatus 700 may be implemented using any combination of discrete circuitry, application specific integrated circuits (ASICs), logic gates and/or single chip architectures. Further, the features of apparatus 700 may be implemented using microcontrollers, programmable logic arrays and/or microprocessors or any combination of the foregoing where suitably appropriate (collectively or individually referred to as "logic").

It should be appreciated that apparatus 700 represents only one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments of the present invention.

. Unless contrary to physical possibility, the inventors envision the methods described herein: (i) may be performed in any sequence and/or in any combination; and (ii) the components of respective embodiments may be combined in any manner.

Although there have been described example embodiments of this novel invention, many variations and modifications are possible without departing from the scope of the invention. Accordingly the inventive embodiments are not limited by the specific disclosure above, but rather should be limited only by the scope of the appended claims.

## Claims

1.   A method for communicating in a wireless mesh network, the method comprising:

  allocating orthogonal frequency division multiple access OFDMA resources in a multi-hop wireless mesh network based, at least in part, on one or more cost metrics associated with wireless links between nodes in a multi-hop path;
  the method being **characterised in that**:
  said allocating OFDMA resources comprises assigning a same subcarrier for all wireless links between base station nodes (102-110) in a given multi-hop path and assigning a different subcarrier for a wireless link between a last hop base station node and a mobile station (120).

2.   The method of claim 1 wherein the cost metric is related to an end-to-end throughput quality of the wireless links in the multi-hop path.

3.   The method of claim 1 wherein allocating OFDMA resources is performed in a centralized manner by a macro base station.

4.   The method of claim 1 wherein allocating OFDMA resources is performed by a macro base station for wireless backhaul links and independently by a last hop micro base station for an associated micro radio access network RAN.

5.   A wireless device comprising:

  a processing circuit (750) including logic adapted to allocate orthogonal frequency division multiple access OFDMA resources for communications between the wireless device and one or more mobile stations (120) in a multi-hop wireless mesh network, the allocation based at least in part on, throughput characteristics of one or more wireless links between the wireless device and one or more multi-hop nodes or between the wireless device and the one or more mobile stations (120);

  **characterised in that**:

the logic adapted to allocate OFDMA resources is configured to assign a same subcarrier for communications with a given mobile station (120), the same subcarrier being assigned for links between base stations in a multi-hop path to the given mobile station (120); and

wherein the same subcarrier is different than a subcarrier used for communications between a last hop base station and the given mobile station (120).

6. The wireless device of claim 5 wherein the logic to allocate OFDMA resources is further configured to assign a cluster of subcarriers, different than the same subcarrier, to each base station in the multi-hop wireless mesh network to use for each base station's local radio access network RAN.

7. The wireless device of claim 5 wherein the wireless device comprises one of a macro base station or a micro base station.

8. The wireless device of claim 5 wherein the logic to allocate OFDMA resources includes logic to schedule multiple users based on a maximum signal-to-interference and noise ratio SINR scheduling algorithm.

9. The wireless device of claim 5 wherein the logic to allocate orthogonal frequency division multiple access OFDMA resources includes logic to schedule multiple users based on a proportional fair scheduling algorithm.

10. The wireless device of claim 5 wherein the device further comprises a radio frequency RF interface in communication with the processing circuit (750), the RF interface including at least two antennas and being adapted for multiple-input multiple-output MIMO communications.

11. The wireless device of claim 10 wherein the links between base stations comprise one of wireless local area network WLAN links or wireless metropolitan area network WMAN links.

12. The wireless device of claim 5, comprising:

a radio frequency RF interface, (750) communicatively coupled to the processing circuit (750); and
at least two antennas (718,719) coupled to the RF interface for at least one of multiple-input or multiple-output communication.

13. The system of claim 12 wherein the logic to allocate OFDMA resources is further adapted to assign different time slots of the same subcarrier per mobile station (120) for each hop between the base stations in the multi-hop wireless mesh network.

14. The system of claim 12 wherein the channel quality of the one or more wireless links in the multi-hop wireless mesh network is determined by a distributed routing algorithm.

15. An article of manufacture comprising a tangible medium having machine readable instructions stored thereon, the machine readable instructions, when executed by a processing platform implement a method as claimed in any of claims 1 to 4.

16. The article of claim 15 wherein the maximum SINR scheduling algorithm uses cost metrics derived from a distributed routing algorithm used in the multi-hop wireless mesh network.

17. The article of claim 15 wherein the proportional fair scheduling algorithm uses cost metrics derived from a distributed routing algorithm used in the multi-hop wireless mesh network.

**Patentansprüche**

1. Verfahren zur Kommunikation in einem drahtlosen Maschennetz, wobei das Verfahren folgendes umfasst:

das Zuordnen von OFDMA-Ressourcen (Orthogonal Frequency Division Multiple Access-Ressourcen) in einem drahtlosen Multi-Hop-Maschennetz zumindest teilweise auf der Basis einer oder mehrerer Kostenmetriken, die Funkverbindungen zwischen Knoten in einem Multi-Hop-Pfad zugeordnet sind;

wobei das Verfahren **dadurch gekennzeichnet ist, dass**:

das genannte Zuordnen von OFDMA-Ressourcen das Zuweisen eines gleichen Zwischenträgers für alle Funkverbindungen zwischen Basisstationsknoten (102-110) in einem bestimmten Multi-Hop-Pfad umfasst sowie das Zuweisen eines anderen Zwischenträgers für eine Funkverbindung zwischen einer letzten Hop-Basisstation und einer mobilen Station (120).

2. Verfahren nach Anspruch 1, wobei die Kostenmetrik im Verhältnis zu einer Ende-zu-Ende-Durchsatzgüte der Funkverbindungen in dem Multi-Hop-Pfad steht.

3. Verfahren nach Anspruch 1, wobei das Zuordnen von OFDMA-Ressourcen auf zentralisierte Art und Weise durch eine Makrobasisstation ausgeführt wird.

4. Verfahren nach Anspruch 1, wobei das Zuordnen von OFDMA-Ressourcen durch eine Makrobasisstation für drahtlose Backhaul-Links ausgeführt wird und unabhängig durch eine letzte Hop-Mikrobasisstation für ein zugeordnetes Mikro-Funkzugangsnetz (RAN).

5. Drahtlose Vorrichtung, die folgendes umfasst:

eine Verarbeitungsschaltung (750) mit einer Logik, die OFDMA-Ressourcen (Orthogonal Frequency Division Multiple Access-Ressourcen) für Kommunikationen zwischen der drahtlosen Vorrichtung und einer oder mehreren mobilen Stationen (120) in einem drahtlosen Multi-Hop.Maschennetz zuordnen kann, wobei das Zuordnen zumindest teilweise auf Durchsatzmerkmalen einer oder mehrerer Funkverbindungen zwischen der drahtlosen Vorrichtung und einem oder mehreren Multi-Hop-Knoten oder zwischen der drahtlosen Vorrichtung und der einen oder den mehreren mobilen Stationen (120) basiert;

**dadurch gekennzeichnet, dass**:

die Logik, die OFDMA-Ressourcen zuordnen kann, so konfiguriert ist, dass sie einen gleichen Zwischenträger für Kommunikationen mit einer bestimmten mobilen Station (120) zuweist, wobei der gleiche Zwischenträger zugewiesen wird für Verbindungen zwischen Basisstationen in einem Multi-Hop-Pfad zu der bestimmten mobilen Station (120); und

wobei der gleiche Zwischenträger sich von einem Zwischenträger unterscheidet, der für Kommunikationen zwischen einer letzten Hop-Basisstation und der bestimmten mobilen Station (120) eingesetzt wird.

6. Drahtlose Vorrichtung nach Anspruch 5, wobei die Logik zum Zuordnen von OFDMA-Ressourcen ferner so konfiguriert ist, dass ein Cluster von Zwischenträgern, die sich von dem gleichen Zwischenträger unterscheiden, jeder Basisstation in dem drahtlosen Multi-Hop-Maschennetz zugewiesen wird, zur Verwendung für jedes lokale Funkzugangsnetz (RAN) jeder Basisstation.

7. Drahtlose Vorrichtung nach Anspruch 5, wobei die drahtlose Vorrichtung eine Makrobasisstation oder eine Mikrobasisstation umfasst.

8. Drahtlose Vorrichtung nach Anspruch 5, wobei die Logik zum Zuordnen von OFDMA-Ressourcen eine Logik zum Scheduling mehrerer Benutzer auf der Basis eines maximalen Signal-Interferenz- und Störabstands-Scheduling-Algorithmus (SINR-Algorithmus) aufweist.

9. Drahtlose Vorrichtung nach Anspruch 5, wobei die Logik zum Zuordnen von OFDMA-Ressourcen (Orthogonal Frequency Division Multiple Access-Ressourcen) eine Logik zum Scheduling mehrerer Benutzer auf der Basis eines proportional fairen Scheduling-Algorithmus aufweist.

10. Drahtlose Vorrichtung nach Anspruch 5, wobei die Vorrichtung ferner eine Hochfrequenz-Schnittstelle (HF-Schnittstelle) in Übertragungsverbindung mit der Verarbeitungsschaltung (750) umfasst, wobei die HF-Schnittstelle mindestens zwei Antennen aufweist und sich für Multiple-Input-Multiple-Output-Kommunikationen (MIMO-Kommunikationen) eignet.

11. Drahtlose Vorrichtung nach Anspruch 10, wobei die Verbindungen zwischen Basisstationen WLAN-Verbindungen (drahtlose lokale Netzwerkverbindungen) oder WMAN-Verbindungen (Wireless Metropolitan Area-Netzwerkverbindungen) umfassen.

12. Drahtlose Vorrichtung nach Anspruch 5, wobei diese folgendes umfasst:

eine Hochfrequenz-Schnittstelle (HF-Schnittstelle) (750), die kommunikativ mit der Verarbeitungsschaltung (750) gekoppelt ist; und
mindestens zwei Antennen (718, 719), die mit der HF-Schnittstelle für mindestens eine Multiple Input- oder Multiple Output-Kommunikation gekoppelt sind.

13. System nach Anspruch 12, wobei die Logik zum Zuordnen von OFDMA-Ressourcen ferner unterschiedliche Zeitschlitze des gleichen Zwischenträgers je mobiler Station (120) für jeden Hop zwischen den Basisstationen in dem drahtlosen Multi-Hop-Maschennetz zuweisen kann.

14. System nach Anspruch 12, wobei die Kanalgüte der einen oder mehreren Funkverbindungen in dem drahtlosen Multi-Hop-Maschennetz durch einen verteilten Routing-Algorithmus bestimmt wird.

15. Erzeugnis, das ein greifbares Medium mit darauf gespeicherten maschinenlesbaren Befehlen umfasst, wobei die maschinenlesbaren Befehle, wenn sie durch eine Verarbeitungsplattform ausgeführt werden, ein Verfahren nach einem der Ansprüche 1 bis 4 ausführen.

16. Erzeugnis nach Anspruch 15, wobei der maximale SINR-Scheduling-Algorithmus von einem verteilten Routing-Algorithmus, der in dem drahtlosen Multi-Hop-Maschennetz verwendeten Kostenmetriken eingesetzt wird, abgeleitet wird.

17. Erzeugnis nach Anspruch 15, wobei der proportional faire Scheduling-Algorithmus Kostenmetriken verwendet, die von einem verteilten Routing-Algorithmus abgeleitet werden, der in dem drahtlosen Multi-Hop-Maschennetz eingesetzt wird.

## Revendications

1. Procédé de communication dans un réseau maillé sans fil, le procédé comprenant l'étape consistant à :

attribuer des ressources à accès multiple par répartition en fréquence orthogonale AMRFO dans un réseau maillé sans fil à sauts multiples sur la base, au moins en partie, d'une ou de plusieurs mesures associées à des liaisons sans fil entre les noeuds d'un chemin à sauts multiples ;
le procédé étant **caractérisé en ce que** :
ladite attribution de ressources AMRFO comprend l'étape consistant à affecter une même sous-porteuse à toutes les liaisons sans fil entre des noeuds de station de base (102-110) dans un chemin à sauts multiples donné et à affecter une sous-porteuse différente pour une liaison sans fil entre un noeud de station de base de dernier saut et une station mobile (120).

2. Procédé selon la revendication 1, dans lequel la mesure de coûts est liée à une qualité de débit de bout en bout des liaisons sans fil dans le chemin à sauts multiples.

3. Procédé selon la revendication 1, dans lequel l'attribution des ressources AMRFO est réalisée de manière centralisée par une station de base macro.

4. Procédé selon la revendication 1, dans lequel l'attribution des ressources AMRFO est réalisée par une station de base macro pour les liaisons terrestres sans fil et indépendamment par une station de base micro de dernier saut pour un réseau à accès radio RAR micro associé.

5. Dispositif sans fil comprenant :

un circuit de traitement (750) comprenant une logique adaptée pour attribuer des ressources à accès multiple par répartition en fréquence orthogonale AMRFO à des communications entre le dispositif sans fil et une ou plusieurs stations mobiles (120) dans un réseau maillé sans fil à sauts multiples, l'attribution étant basée au moins en partie sur les caractéristiques de débit d'une ou de plusieurs liaisons sans fil entre le dispositif sans fil et un ou plusieurs noeuds à sauts multiples ou entre le dispositif sans fil et la ou les plusieurs stations mobiles (120) ;

**caractérisé en ce que** :

la logique adaptée pour attribuer les ressources AMRFO est configurée pour attribuer une même sous-porteuse aux communications avec une station mobile donnée (120), la même sous-porteuse étant attribuée aux liaisons entre les stations de base dans un chemin à sauts multiples et la station mobile donnée (120) ; et

dans lequel la même sous-porteuse est différente d'une sous-porteuse utilisée pour des communications entre une station de base de dernier saut et la station mobile donnée (120).

**6.** Dispositif sans fil selon la revendication 5, dans lequel la logique pour attribuer les ressources AMRFO est en outre configurée pour affecter un groupe de sous-porteuses, différentes de la même sous-porteuse, à chaque station de base dans le réseau maillé sans fil à sauts multiples à utiliser pour chaque réseau à accès radio RAR local de la station de base.

**7.** Dispositif sans fil selon la revendication 5, dans lequel le dispositif sans fil comprend l'une d'une station de base macro ou d'une station de base micro.

**8.** Dispositif sans fil selon la revendication 5, dans lequel la logique d'attribution de ressources AMRFO comprend une logique pour programmer de multiples utilisateurs sur la base d'un algorithme de programmation d'un rapport signal utile sur signal brouilleur et bruit (en anglais « signal-to-interference and noise ratio » - SINR) maximal.

**9.** Dispositif sans fil selon la revendication 5, dans lequel la logique d'attribution de ressources à accès multiple par répartition en fréquence orthogonale AMRFO comprend une logique pour programmer de multiples utilisateurs sur la base d'un algorithme de programmation équitable proportionnel.

**10.** Dispositif sans fil selon la revendication 5, dans lequel le dispositif comprend en outre une interface radiofréquence RF en communication avec le circuit de traitement (750), l'interface RF comprenant au moins deux antennes et étant adaptée pour des communications à entrées multiples et sorties multiples (en anglais « multiple-input multiple-output » - MIMO).

**11.** Dispositif sans fil selon la revendication 10, dans lequel les liaisons entre les stations de base comprennent l'une de liaisons de réseau local sans fil (en anglais « Wireless Local Area Network » - WLAN) ou de liaisons de réseau métropolitain sans fil (en anglais « Wireless Metropolitan Area Network » - WMAN).

**12.** Dispositif sans fil selon la revendication 5, comprenant :

une interface radiofréquence RF (750), couplée en communication au circuit de traitement (750) ; et au moins deux antennes (718, 719) couplées à l'interface RF pour au moins une communication à entrées multiples ou à sorties multiples.

**13.** Système selon la revendication 12, dans lequel la logique d'attribution de ressources OFDMA est en outre adaptée pour affecter différents intervalles de temps de la même sous-porteuse par station mobile (120) pour chaque saut entre les stations de base dans le réseau maillé sans fil à sauts multiples.

**14.** Système selon la revendication 12, dans lequel la qualité de canal de la ou de plusieurs liaisons sans fil dans le réseau maillé sans fil à sauts multiples est déterminée par un algorithme de routage distribué.

**15.** Article de fabrication comprenant un support tangible sur lequel sont stockées des instructions lisibles par machine, les instructions lisibles par machine, lorsqu'elles sont exécutées par une plate-forme de traitement, mettent en oeuvre un procédé selon l'une quelconque des revendications 1 à 4.

**16.** Article selon la revendication 15, dans lequel l'algorithme de programmation SINR maximum utilise des mesures de coûts dérivées d'un algorithme de routage distribué utilisé dans le réseau maillé sans fil à sauts multiples.

17. Article selon la revendication 15, dans lequel l'algorithme de programmation équitable proportionnel utilise des mesures de coûts dérivées d'un algorithme de routage distribué utilisé dans le réseau maillé sans fil à sauts multiples.

FIG. 1

FIG. 2

FIG. 3

FIG. 4

FIG. 5

FIG. 6

FIG. 7

**EP 1 992 121 B1**

**Patent documents cited in the description**

- WO 2005060170 A
- EP 1617608 A
- US 31820605 A